# EUROPEAN PATENT APPLICATION

(11) **EP 1 622 353 A1**
(43) Date of publication of application: **01.02.2006**
(21) Application number: 05254706.4
(22) Date of filing: 28.07.2005
(51) Int. Cl.: H04N 1/00, B41J 2/00

(54) **Print head driving apparatus usable with an ink-jet printer and semiconductor circuit board to implement the print head driving apparatus**

(30) Priority: 30.07.2004 KR 2004060108
(71) Applicant: SAMSUNG ELECTRONICS CO., LTD., Suwon-si, Gyeonggi-do (KR)
(72) Inventor: Han, Eun-bong, Suwon-si, Gyeonggi-do (KR)
(74) Representative: Davies, Robert Ean

(57) **Abstract**

A print head driving apparatus capable of enhancing integration of a semiconductor circuit board Incorporating the print head driving apparatus. The print head driving apparatus includes a selecting unit (720) to selectively drive a plurality of nozzles in the print head, a primitive signal receiving unit (730) to receive a serial primitive signal to select a primitive group from among a plurality of n primitive groups each containing a plurality of m nozzles capable of ejecting ink from the print head during a given print cycle, to convert the serial primitive signal to a parallel primitive signal, and to provide the parallel primitive signal to the selecting unit, and an address signal receiving unit (740) to receive a serial address signal to select at least one nozzle through which ink should be ejected in the selected primitive group, to convert the serial address signal to a parallel address signal, and to provide the parallel address signal to the selecting unit (720), wherein the primitive signal-receiving unit includes n 1-bit shift registers (732_n) serially connected to each other, and each of the n 1-bit shift registers corresponds to a respective one of the plurality of n primitive groups, Therefore, it is possible to reduce a number of wires required to transfer selection signals on a semiconductor circuit board in which the print head driving apparatus is implemented, thereby achieving a high-density layout of the semiconductor circuit board.

## Description

The present invention relates to a print head driving apparatus to drive an ink-jet printer, and more particularly, to a print head driving apparatus capable of enhancing integration of a semiconductor circuit board in which the print head driving apparatus is implemented, and a semiconductor circuit board adapted to Implement the print head driving apparatus.

A printer is generally an apparatus for printing data that Is processed by a computer and can confirm, keep, and transfer the data as documents. The printer is typically Installed as a basic component in appliances such as a multifunction machine, a facsimile, an electronic cash register, a cash dispenser, etc.

To date, a daisy-wheel printer, a dot-pin printer, an ink-jet printer, a laser printer, etc. has been developed. In particular, the ink-jet printer and the laser printer have been widely used,

The basic operation principle of the ink-jet printer Is to fill ink in an ink chamber including a nozzle, being a narrow tube disposed above or adjacent to the Ink chamber and to create pressure in the ink chamber during a short time to eject Ink drops through the nozzle.

Ink-jet printers can be classified into piezoelectric-type ink-jet heads and thermal-type ink-jet heads. In a piezoelectric-type ink-jet head, a piezoelectric material attached in the ink chamber acts as an actuator such that ink is ejected through the nozzle by compression and expansion due to vibration of the piezoelectric material. In a thennal-type Ink-jet head, bubbles are momentarily generated when a current Is applied to a thin film heater disposed In the Ink chamber, and a resistance thereof acts as an actuator for ejecting the Ink.

Hereinafter, an ink ejecting principle of the thermal-type ink-jet head will be described In further detail. If the current flows through the thin film heater, which contacts a protection film on a silicon substrate, a temperature of about 500°C is momentarily generated due to the electric

resistance. The heat generated is transferred to the Ink filled in the ink chamber of the ink-jet head so as to heat the ink up to a boiling point. As a result, the ink is ejected through the nozzle by the pressure of the bubbles generated by the boiling of the ink. Since the current flow to the thin film heater is cut off after the ink is ejected, the ink is cooled and the bubbles gradually disappear. While the bubbles disappear, ink is re-filled into the ink chamber by capillarlty and a pressure difference between the pressure in the ink chamber and an atmospheric pressure.

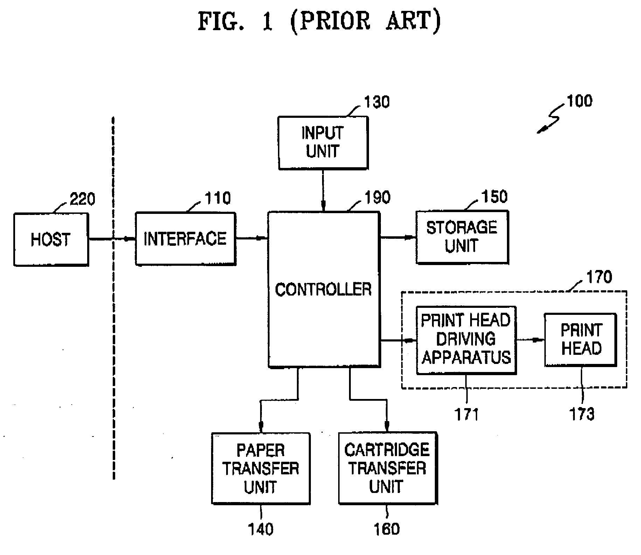

FIG. 1 Is a circuit diagram illustrating a general ink-jet printer 100. As Illustrated In FIG. 1, the general Ink-jet printer 100 includes an interface 110 for receiving print data and control commands from a host computer 220, an input unit 130 through which a user inputs a selection command, a storage unit 150 for storing the print data and programs for driving and controlling the system, a print unit 170 for printing the print data, a paper transfer unit 140 for transferring papers, a cartridge transfer unit 160 for transferring a cartridge, and a controller 190 for controlling the entire system. The print unit 170 includes a print head driving apparatus 171 and a print head 173. The print unit 170 is implemented on a semiconductor circuit board that is mounted on the cartridge. Accordingly, higher integration of the semiconductor circuit board enables the size of the cartridge to be reduced.

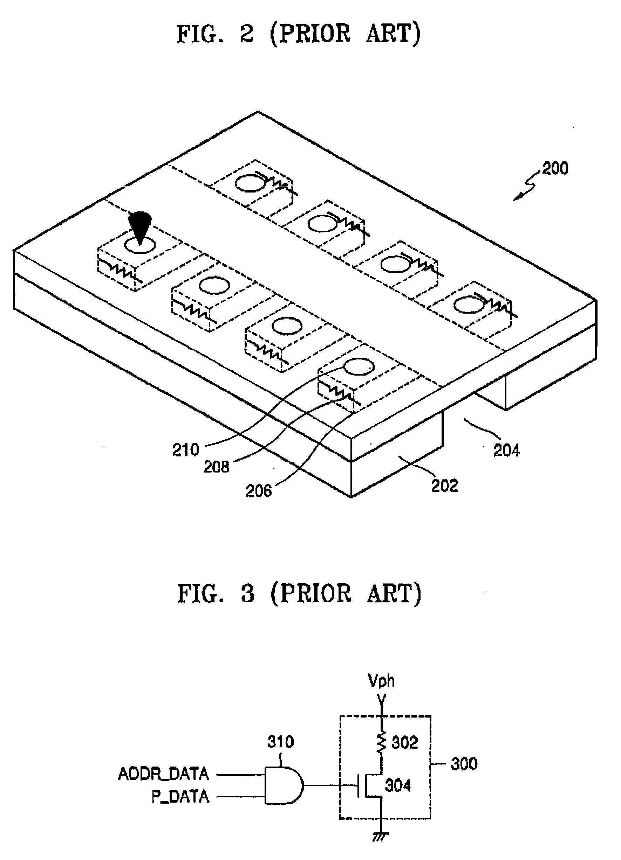

FIG. 2 illustrates a general print head 200 (same as the print head 173 of FIG. 1). In the print head 200, an ink tank (not shown) is located over or under a device substrate 202. Ink that flows from the Ink tank reaches a heating element 208 via an ink supply path 204 and an ink flow path 206. If current is applied to heating element 208 to heat the ink to its boiling point, the ink boils to generate bubbles. The ink is then ejected through a nozzle 210 by pressure of the bubbles, In the print head 200, the heating element 208, the nozzle 210, and transistors (or TFTs) for supplying a driving voltage to the heating element 208, etc. are formed through a semiconductor manufacturing process.

Referring to FIGS. 1 and 2, the ink-jet printer 100, the print head 200 (same as the print head 173 of FIG. 1) is installed in a carriage (cartridge) that moves forward and backward across papers to be printed on. While the print head 200 moves across a paper, the controller 190 selectively drives a plurality of nozzle drivers (e.g., the heating element 208 of FIG. 2) In the print head 200 to eject ink drops on the paper and print images and text on the paper. After the Ink is ejected through the nozzle 210, Ink Is refilled in the ink chamber from the ink tank connected to the print head 200 or is separated from the print head 200 via the Ink supply path 204 and the flow path 206.

The nozzle drivers are provided in the same number as the number of nozzles 210 included in the print head 200 and are selectively activated. Generally, In a print head, nozzles are arranged in a two-dimensional matrix format and are divided into several logic groups to be selectively driven, as illustrated in FIG. 2. Accordingly, the nozzle drivers can be controlled Individually by a first signal for selecting a group among the several logic groups and a second signal for selecting a nozzle (or nozzles) within the selected group.

FIG. 3 is a circuit diagram illustrating a general nozzle driver 300. Referring to FIG. 3, the nozzle driver 300 Includes a heating device 302 (same as the heating element 208 of FIG. 2) connected between a driving supply voltage Vph and a ground. The heating device 302 is serially connected to a transistor 304 located between the driving supply voltage Vph and the ground. The transistor 304 is selectively activated by an AND gate 310 as a selector for selecting the nozzle driver 300. The AND gate 310 is driven according to two input signals P_DATA (i.e., the first signal mentioned above) and ADDR_DATA (i.e., the second signal mentioned above). Here, the input signal P_DATA is a primitive signal for designating a primitive group and the input signal ADDR_DATA is an address signal for designating an address within the selected primitive group, Generally, the heating device 302 is a resistor and the transistor 304 is a field effect transistor (FET) such as an NMOS transistor.

In the print head, the nozzle drivers 300 are mounted in the same number as the number of nozzles and the heating devices 302 are located near the nozzles (generally, under the nozzles) to heat ink. Since the nozzles are typically arranged in a two-dimensional matrix format, all the heating devices 302 and transistors 304 are also arranged to form arrays for the convenience of manufacturing process. In the description that follows, an array of the transistors 304 is referred to as a transistor array, a structure consisting of a heating device and a corresponding transistor is referred to as a nozzle driver, and an array of the nozzle drivers is referred to as a nozzle driving unit. Examples of the conventional print head driving apparatus are disclosed in Japanese Patent Publications No. 7-117251 (published on May 9, 1995) and No. 5-229111 (published on September 7, 1993).

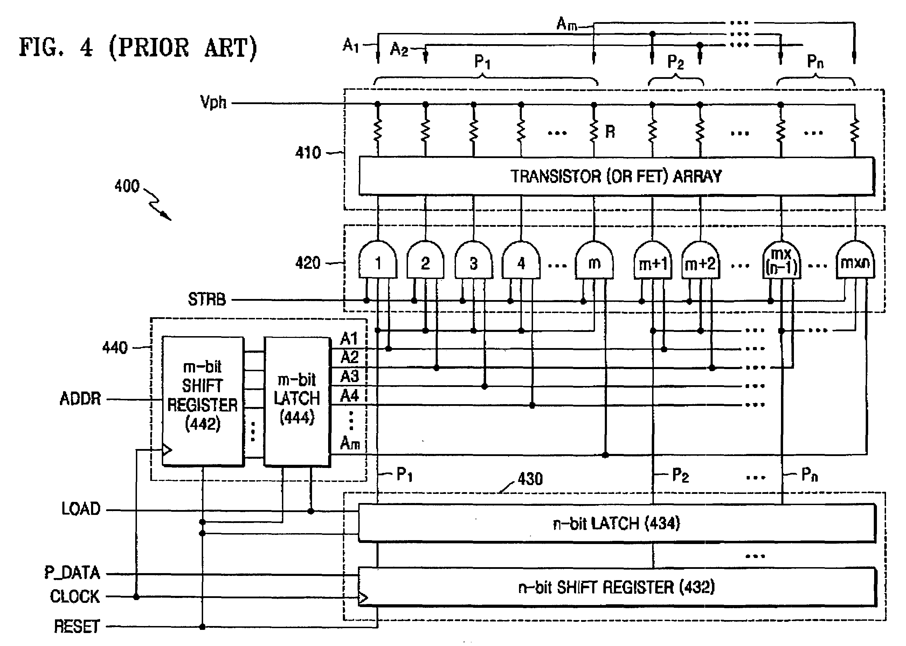

FIG. 4 Is a circuit diagram illustrating a conventional print head driving apparatus 400.

The print head driving apparatus 400 includes a nozzle driving unit 410, a selecting unit 420 for selectively driving a plurality of nozzle drivers included in the nozzle driving unit 410, a primitive signal receiving unit 430 for receiving a primitive group selection signal (primitive signal) for selecting a primitive group from among a plurality of primitive groups (n groups P1 through Pn) each consisting of *m* nozzles through which ink can be ejected from the print head during a given print cycle, and an address signal receiving unit 440 for receiving an inter-group selection signal (address signal) for selecting one or more nozzles through which ink should be ejected from among the m nozzles within the primitive group selected by the primitive signal.

The primitive signal-recelving unit 430 includes an n-blt shift register 432 for receiving an *n*-bit serial primitive signal and an *n*-bit latch 434 for latching the *n*-bit primitive signal stored in the *n-*bit shift register 432.

The address signal-receiving unit 440 includes an *m*-bit shift register 442 for receiving an *m*-bit serial address signal and an *m*-bit latch 444 for latching the *m*-bit address signal stored in the *m*-bit shift register 442.

The selecting unit 420 includes a plurality of selectors (AND gates) corresponding to the respective nozzle drivers in the noule driving unit 410.

A primitive signal P_DATA and an address signal ADDR_DATA are provided to select one or more nozzles through which ink should be ejected during the given print cycle. For example, in a print head having *n* x *m* nozzles, the primitive signal P_DATA is a signal for selecting a primitive group from among the n primitive groups P1 through Pn, each primitive group Including m nozzles through which Ink can be ejected during the given print cycle. In the print head having n x m nozzles, the address signal ADDR_DATA is a signal for selecting one or more nozzle drivers corresponding to one or more nozzles though which ink should be ejected from among the *m* nozzles within the primitive group selected from among the primitive groups P1 through P*n.* For example, referring to FIG. 4, it is possible that nozzles that correspond to the primitive group P1 are selected by AND gates 1 through *m* according to a first signal output from the *n*-bit latch 434 so that ink is ejected from nozzles selected within the selected primitive group P1 according to a signal output from the *m*-bit latch 444.

If the primitive signal P_DATA and the address signal ADDR_DATA are 10 bits, respectively, 10 primitive groups (P1 through P10) are provided to correspond to the bit number of the primitive signal P_DATA and 10 nozzles (A1 through A10) through which ink can be ejected during the given print cycle from each primitive group are provided to correspond to the bit number of the address signal ADDR_DATA. That Is, the total number of nozzles in the print head is 10 x 10 = 100. In other words, up to ten primitive groups may be selected and up to ten nozzles within each selected primitive group may be selected to eject ink during the give print cycle.

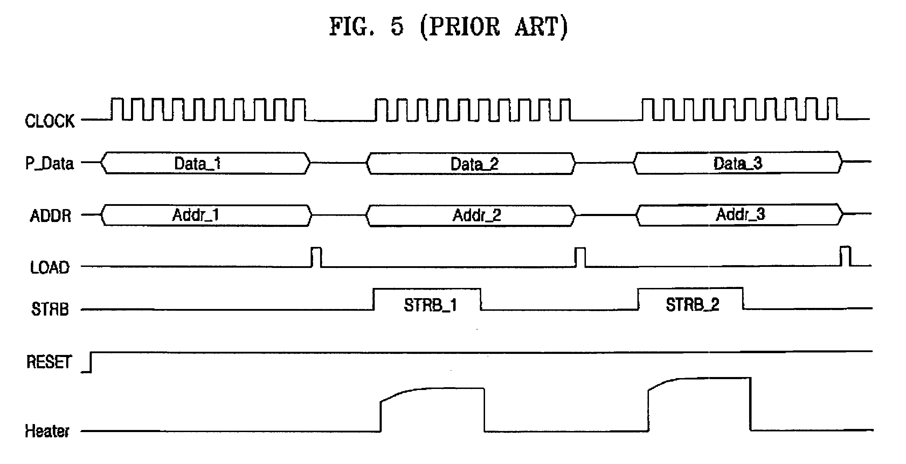

FIG. 5 is a timing diagram for signals applied to the print head driving apparatus 400 of FIG. 4.

A first address Addr_1 of an address signal ADDR and a first primitive data Data_1 of a primitive signal P_Data, which are serial data signals, are shifted and stored in the *m*-bit and *n*-bit shift registers 442 and 432, respectively. In synchronization with a clock signal CLOCK.

After both the first address Addr_1 of m bits and the first primitive data Data_1 of n bits are received, a load signal LOAD is received. The latches 444 and 434 are triggered by the load signal LOAD to latch the first address Addr_1 of *m* bits and the first primitive data Data_1 of *n* bits, respectively.

The first address Addr_1 of *m* bits and the first primitive data Data_1 of *n* bits latched by the latches 444 and 434, respectively, are provided to the AND gates of the selecting unit 420.

Thereafter, a first strobe STRB_1 of a fire strobe signal STRB for driving a heating device of the nozzle driving unit 410 is received by the selecting unit 420. The AND gates of the selecting unit 420 receive the first strobe STRB_1 from the controller and corresponding bits of the first Addr_1 signal and the first primitive data Data_1 to allow ink to be ejected from selected nozzles driven by the nozzle drivers selected by the first address Addr_1 of m bits and the first primitive data Data_1 of n bits. Accordingly, ink is ejected from the selected nozzles in the print head during a first given print cycle.

Then, a second address Addr_2 of the address signal ADDR and a second primitive data Data_2 of the primitive signal P_Data that correspond to selected nozzles for a second print cycle are received in synchronization with the first strobe STRB_1.

A reset signal RESET is provided to reset the *m*-bit shift register 442 and *m*-bit latch 444 of the address signal receiving unit 440 and the *n*-bit shift register 432 and *n*-bit latch 434 of the primitive signal receiving unit 430.

Since a selection signal corresponding to an address signal ADDR and a selection signal corresponding to a primitive signal P_Data are applied to the AND gates of the selecting unit 420 after a load signal LOAD is received by the *m*-bit latch 444 and the *n*-bit latch 434, one or more nozzles to be driven In the first print cycle by the first strobe signal STRB_1 correspond to a primitive group selected by the first primitive data Data_1 and nozzles designated within the selected primitive group by the first address Addr_1; and one or more nozzles to be driven in the second print cycle by a second strobe STRB_2 correspond to a primitive group selected by the second primitive data Data_2 and nozzles designated within the selected primitive group by the second address Addr_2. An example of a conventional semiconductor circuit board including the print head driving unit is disclosed In U.S. Patent Publlcation No, 6,499,834 (published on December 31, 2002).

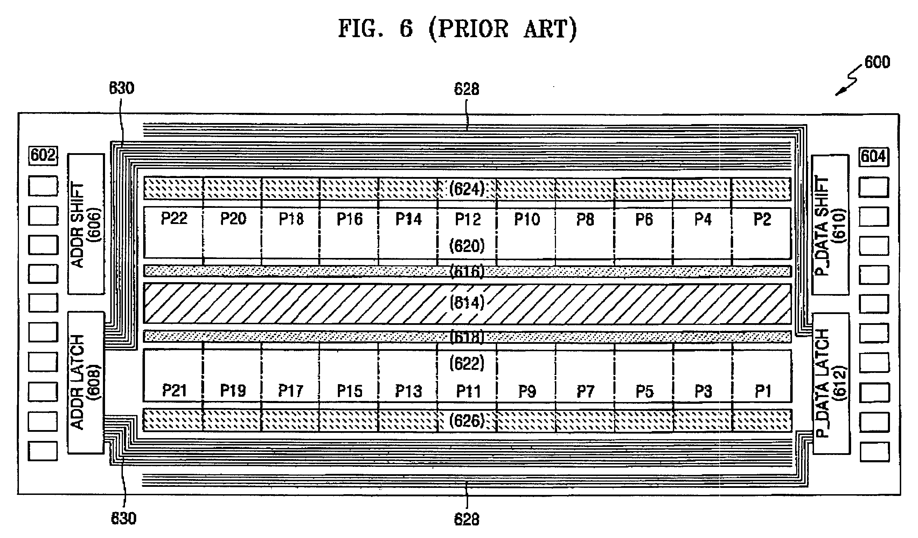

FIG. 6 illustrates a layout of a conventional semiconductor circuit board 600 in which the print head driving apparatus of FIG. 4 is implemented, Referring to FIG. 6, the print head of F1G. 2 is located in a center portion of the semiconductor circuit board 600 and the print head driving apparatus of FIG. 4 is located around the print head.

Pad groups 602 and 604 for electrically connecting internal logic devices of the semiconductor circuit board 600 to external devices are located along a left and a right edge portion of the semiconductor circuit board 600, respectively. A shift register 606 (corresponds to *m*-bit shift register 442 of FIG. 4) and a latch 608 (corresponds to *m*-bit latch 444 of FIG. 4) for receiving an address signal ADDR are located next to the pad group 602 on the left side of the semiconductor circuit board 600, and a shift register 610 (corresponds to *n*-bit shift register 432 of FIG. 4) and a latch 612 (corresponds to *n*-bit latch 434 of FIG. 4) for receiving a primitive signal P_DATA are located next to the pad group 604 on the right side of the semiconductor circuit board 600.

An ink supply path 614 is formed along a longitudinal direction of the semiconductor circuit board 600 in the center portion of the semiconductor circuit board 600, and upper and lower nozzles 616 and 618 are located over and under the ink supply path 614 along the longitudinal direction of the Ink supply path 614, respectively. The actual layout of the semiconductor circuit board 600 may be a little different from the layout described above. Upper and lower transistor arrays 620 and 622 are located over the upper nozzles 616 and under the lower nozzles 618, respectively. Upper and lower selecting units 624 and 626 are located over the upper transistor array 620 and under the lower transistor array 622, respectively. Here, the upper and lower transistor arrays 620 and 622 are segmented into primitive groups P1 through P22 according to a number of primitive groups.

P_DATA bus groups 628 for transferring a selection signal corresponding to a primitive signal P_DATA and ADDR bus groups 630 for transferring a selection signal corresponding to an address signal ADDR are located along the edges of the semiconductor circuit board 600. Here, the P_DATA bus groups 628, which consist of n wires corresponding to n bits, are arranged in a manner such that *n*/2 wires are arranged along top and right edges of the semiconductor circuit board 600 and the remaining n/2 wires are arranged along bottom and the right edges of the semiconductor circuit board 600. The ADDR bus groups 630, which consist of 2m wires to transfer m bits, are arranged in a manner that m wires are arranged along the top and left edge sides of the semiconductor circuit board 600 and the remaining m wires are arranged along the bottom and left edge sides of the semiconductor circuit board 600.

In the semiconductor circuit board 600 illustrated in FIG. 6, the primitive groups P1 through P22, each having m nozzles through which ink can be ejected at the same time during the given print cycle, are divided into two sets each including 11 primitive groups with the ink supply path 614 disposed therebetween. The number of nozzles to be driven is determined according to the bit number of the address signal. For example, if a received address signal has 10 bits, a maximum of 220 (22 x 10) nozzles can be driven during the given print cycle.

Referring to FIG. 6, in the conventional semiconductor board 600, the shift registers 606 and 810 and latches 608 and 612 are located respectively in the left and right sides of the semiconductor circuit board 600, and the selection signals are transferred to the upper and lower selecting units 624 and 626 via the P_DATA and ADDR bus groups 628 and 630. In particular, the shift register 606 and latch 608 are shared by all the primitive groups P1 through P22. Accordingly, *n*/2 + *m* (wherein n Is the bit number of the primitive signal and m is the bit number of the address signal) number of wires must be provided to each of the upper and lower portions of the semiconductor circuit board 600 so that corresponding selection signals can be supplied to all the primitive groups P1 through P22.

That is, the semiconductor circuit board 600 Illustrated in FIG. 6 requires a large space on which the wires with the number of n + 2m (i.e., *n*/2 + m on each side) can be arranged.

As a result, since the conventional semiconductor circuit board requires large space to arrange the shift registers and latches for processing primitive signals and address signals and buses for transferring selection signals generated from the latches, a problem exists in view of space use effciency.

Embodiments of the present invention provide a print head driving apparatus capable of enhancing Integration of a semiconductor circuit board

Embodiments of the present invention also provide a semiconductor circuit board adapted to the print head driving apparatus.

Additional aspects and advantages of the present invention will be set forth in part in the description which follows and, in part, will be obvious from the description, or may be learned by practice of the invention.

According to a first aspect of the invention, there is provided a print head driving apparatus to drive a print head of an ink-jet printer, comprising a selecting unit to selectively drive a plurality of nozzles in the print head, a primitive signal receiving unit to receive a serial primitive signal to select a primitive group from among a plurality of n primitive groups each containing a plurality of m nozzles capable of ejecting ink from the print head during a given print cycle, to convert the serial primitive signal to a parallel primitive signal, and to provide the parallel primitive signal to the selecting unit, and an address signal receiving unit to receive a serial address signal to select at least one nozzle through which ink should be ejected within the selected primitive group, to convert the serial address signal to a parallel address signal, and to provide the parallel address signal to the selecting unit. The primitive signal-receiving unit may comprise n 1-bit shift registers serially connected to each other, and each of the n 1-bit shift registers corresponds to a respective one of the plurality of n primitive groups.

The address signal-receiving unit may comprise m 1-bit shift registers serially connected to each other.

According to a second aspect of the invention, there is provided a print head driving apparatus, comprising: a plurality of nozzles: a selecting unit operable to receive one or more selection signals and to selectively drive one or more nozzles to print during a print cycle; and a selection signal receiving unit including a plurality of 1-bit shift registers to receive a selection signal and to provide the selection signal to the selecting unit, and the selection signal including a plurality of bits that correspond to the plurality of nozzles to indicate whether the respective nozzles should print during the print cycle.

According to a third aspect of the Invention, there Is provided a semiconductor circuit board having a print head driving apparatus of an ink-jet printer, comprising a print head located in a center portion of the semiconductor circuit board and including a plurality of nozzles, a plurality of pads located along edge portions of the semiconductor circuit board to electrically connect internal devices of the semiconductor circuit board to external devices, a selecting unit mounted adjacent to the print head to receive a selection signal to selectively drive a plurality of nozzles in the print head, and a primitive signal receiving unit mounted parallel to the selecting unit with respect to a longitudinal direction of the semiconductor circuit board and adjacent to the print head to provide a primitive group selection signal to the selecting unit, wherein the primitive group selection signal designates one of a plurality of primitive groups containing a plurality of nozzles capable of being driven during a given print cycle.

The primitive signal-receiving unit may comprise a plurality of 1-bit shift registers serially connected to each other, and each of the 1-bit shift registers corresponds to a respective one of the plurality of primitive groups.

The semiconductor circuit board may further comprise an address signal receiving unit mounted parallel to the selecting unit with respect to the longitudinal direction of the semiconductor circuit board and adjacent to the print head to provide an inter-group selection signal to the selecting unit designating at least one of the plurality of nozzles included in the selected primitive group.

According to a fourth aspect of the invention, there is provided a semiconductor circuit board having a print head driving apparatus implemented thereon, comprising: a print head region including a nozzle region and an ink supply region and extending along a first direction of the semiconductor circuit board at a center thereof; at least one nozzle driving unit region adjacent to the print head region and extending along the first direction of the semiconductor circuit board and in parallel to the print head region; at least one selecting unit region adjacent to the at least one nozzle driving region and extending along the first direction of the semiconductor circuit board and in parallel to the print head region; and at least one primitive signal receiving unit region adjacent to the at least one selecting unit region and extending along the first direction of the semiconductor circuit board and in parallel to the print head region.

According to a fifth aspect of the invention, there is provided a semiconductor circuit board, comprising: a plurality of nozzles; a selecting unit to receive one or more selection signals and to selectively drive one or more nozzles to print during a print cycle; and a selection signal receiving unit including a plurality of 1-bit shift registers to receive a selection signal and to provide the selection signal to the selecting unit, and the selection signal Including a plurality of bits that correspond to the plurality of nozzles to indicate whether the respective nozzles should print during the print cycle.

According to a sixth aspect of the invention, there Is provided a semiconductor circuit board, comprising: a plurality of primitive groups each having a plurality of nozzles disposed in a first direction; and a plurality of 1-bit shift registers disposed in the first direction to correspond to the respective primitive groups.

For a better understanding of the invention, and to show how embodiments of the same may be carried into effect, reference will now be made, by way of example, to the accompanying diagrammatic drawings in which:
FIG. 1 is a block diagram illustrating a general ink-jet printer;
FIG. 2 illustrates a general print head;
FIG 3 is a circuit diagram illustrating a general nozzle driver;
FIG. 4 is a circuit diagram illustrating a conventional print head driving apparatus;
FIG. 5 Is a timing diagram for signals applied to the conventional print head driving apparatus of FIG 4;
FIG 6 Illustrates a layout of a conventional semiconductor circuit board in which the conventional print head driving apparatus of FIG. 4 is implemented:
FIG. 7 is a circuit diagram illustrating a print head driving apparatus according to an embodiment of the present invention:
FIG 8 illustrates a layout of a semiconductor circuit board in which the print head driving apparatus of FIG. 7 is implemented according to an embodiment of the present Invention,
FIG. 9 is a circuit diagram illustrating a print head driving apparatus according to another embodiment of the present invention; and
FIG. 10 illustrates a layout of a semiconductor circuit board in which the print head driving apparatus of FIG. 9 is implemented according to another embodiment of the present invention,

Reference will now be made In detail to embodiments of the present invention, examples of which are Illustrated in the accompanying drawings, wherein like reference numerals refer to the like elements throughout. The embodiments are described below in order to explain the present invention while referring to the figures.

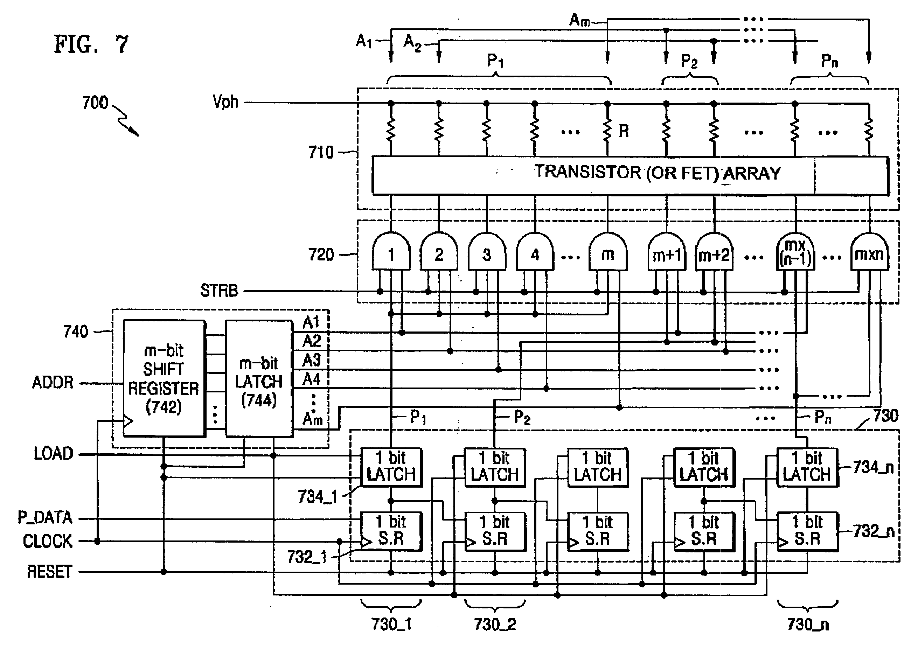

FIG. 7 is a circuit diagram illustrating a print head driving apparatus 700 according to an embodiment of the present Invention. The print head driving apparatus 700 Includes 1-bit latches and 1-bit shift registers to process primitive signals that select a primitive group from a plurality of primitive groups, instead of the *n*-bit shift 432 and n-bit latch 434 of the conventional print head driving apparatus 400 of FIG. 4.

Referring to FIG. 7, the print head driving apparatus 700 includes a nozzle driving unit 710, a selecting unit 720 to selectively drive a plurality of nozzle drivers included in the nozzle driving unit 710, a primitive signal receiving unit 730 to receive a primitive signal to select a primitive group from among a plurality of n primitive groups, each of the plurality of n primitive groups including m nozzles through which ink can be ejected at the same time in a given print cycle from a print head, and an address signal receiving unit 740 to receive an address signal to select one or more nozzles through which ink should be ejected within the primitive group selected by the primitive signal.

The address signal-receiving unit 740 includes an *m*-bit shift register 742 to receive an *m*-bit serial address signal and an *m*-bit latch 744 to latch the *m*-bit address signal stored in the *m*-bit shift register 742.

The primitive signal receiving unit 730 Includes *n* 1-bit shift registers (1-bit SR) 732_1 through 732_*n*. each receiving a prlmltive signal of 1 bit, which are serially connected to each other, and n 1-bit latches 734_1 through 734_*n* to correspond to the *n* 1-bit shift registers 132_1 through 732_*n*.

In the print head driving apparatus 700, the 1-bit shift registers 732_1 to 732_*n* and 1-bit latches 734_1 to 734_*n* to process the primitive signals are provided to correspond to respective primitive groups P1 to Pn, as compared to the conventional print head driving apparatus 400 of FIG 4 in which the *n*-bit shift register 432 and *n*-bit latch 434 correspond to all the primitive groups P1 through P*n*,

By providing the 1-bit shift registers 732_1 to 732_*n* and 1-bit latches 734_1 to 734_*n* to correspond to the respective primitive groups the following advantages can be obtained.

Referring to FIGS. 6 and 7, since respective shift register and latch sets 730_1 through 730_*n* that correspond to the respective primitive groups can be located adjacent to the upper and lower transistor arrays 624 and 626 on the layout of the conventional semiconductor circuit 600, it is possible to reduce the number of wires required to transfer selection signals corresponding to the primitive signals.

In particular, in the conventional print head driving apparatus 400 implemented in the conventional semiconductor circuit board 600 illustrated in FIGS. 4 and 6, respectively, n wires connected from the latch 434 (612 in FIG. 6) to the selecting unit 420 (i.e., upper and lower selection units 624 and 626 in FIG. 6) are required to transfer a selection signal corresponding to the primitive signal to the selecting unit 420, As illustrated in FIG. 6, *n*/2 wires are transferred along the right and top sides and n/2 wires are transferred along the right and bottom sides of the conventional semiconductor circuit board 600 via the P_DATA bus group 628 to the upper and lower selecting units 624 and 626, respectively. However, according to the present embodiment having the configuration Illustrated in FIG, 7, by serially connecting the shift registers 732_1 through 732_*n* that correspond to the respective primitive groups to each other, the primitive signal can be transferred by one or more wires including less than n/2 wires on each side. The one or more wires may be a single wire to transfer the primitive signal. The single wire can transfer the primitive signal to the shift registers that correspond to the respective primitive groups arranged along an upper portion (i.e., P2, P4,..., P22) of a semiconductor circuit board 600 and can transfer the primitive signal to the shift registers that correspond to the respective primitive groups arranged along a lower portion (Le., P1, P3,..., P21) of the semiconductor circuit board.

Space obtained due to the reduction of the number of wires can be used to arrange the shift register and latch sets 730_1 through 730_*n* that correspond to the respective primitive groups. In particular, referring to FIGS. 6 and 7, since only a single wire instead of the n wires Is used to transfer a selection signal corresponding to the primitive signal to the upper and lower selecting units 624 and 626 of the conventional semiconductor circuit board 600, spaces 610 and 612 for the primitive data shift register and latch provided on the right side of the conventional semiconductor circuit board 600 of FIG. 6 become unnecessary. As a result, it is possible to reduce the size of the semiconductor circuit board 600.

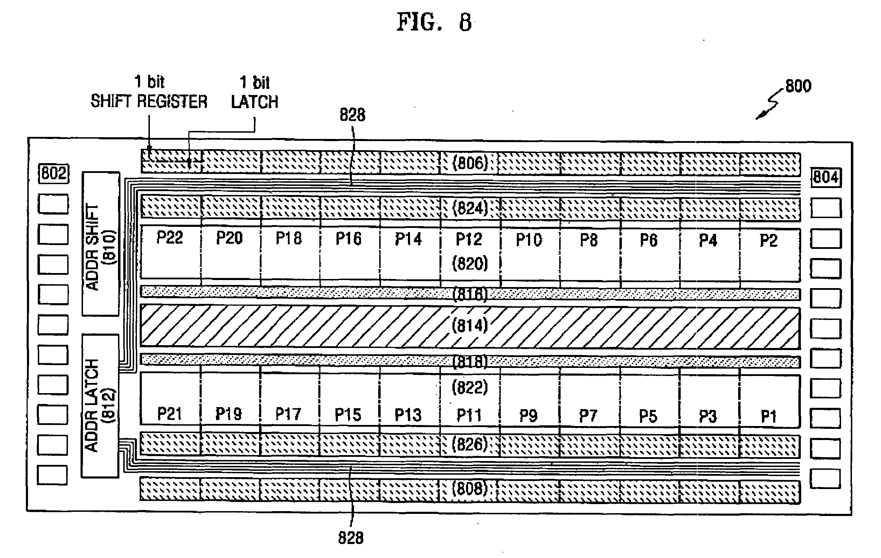

FIG. 8 illustrates a layout of a semiconductor circuit board 800 in which the print head driving apparatus 700 of FIG. 7 is implemented according to an embodiment of the present invention. Referring to FIG. 8, pad groups 802 and 804 to electrically connect internal logic devices of the semiconductor circuit board 800 to external devices are located at the left and right edges of the semiconductor circuit board 800, respectively. A shift register 810 and a latch 812 to process address signals are located next to the pad group 802 at the left portion of the semiconductor circuit board 800.

An Ink supply path 814 is located along a longitudinal direction of the semiconductor circuit board 800 in a center portion thereof, and upper and lower nozzles 816 and 818 are arranged over and under the ink supply path 814 along the longitudinal direction of the ink supply path 814, respectively. Upper and lower transistor arrays 820 and 822 are arranged over the upper nozzle 816 and under the lower nozzle 818, respectively. Upper and lower selecting units 824 and 826 are located over the upper transistor array 820 and under the lower transistor array 822, respectively.

ADDR bus groups 828 to transfer address signals are located along the edge portions of the semiconductor circuit board 800. In particulat, the ADDR bus groups 828, each including m wires corresponding to *m* bits, are arranged in a manner that m wires are arranged along the top and left edges of the semiconductor circuit board 800 and m wires are arranged along the bottom edge of the semiconductor circuit board 800 resulting in 2*m* total wires.

Upper and lower primitive signal receiving units 806 and 808 to transfer primitive signals are located over the upper transistor array 820 and under the lower transistor array 822, respectively. The primitive signal receiving unit 730 of FIG. 7 including the shift register and latch sets 730_1 through 730_n for the respective primitive groups P1 through P22 correspond to the primitive signal-receiving units 806 and 808 of FIG. 8. As illustrated in FIG. 8, since only a single wire, instead of the n/2 wires of the conventional semiconductor circuit board 600 of FIG. 6, Is provided to transfer the primitive signals, it is possible to locate the shift register and latch sets 730_1 through 730_*n* for the respective primitive groups in the upper and iower spaces on the semiconductor circuit board 800 where the n/2 wires are located on the semiconductor circuit board 600 of FIG. 6.

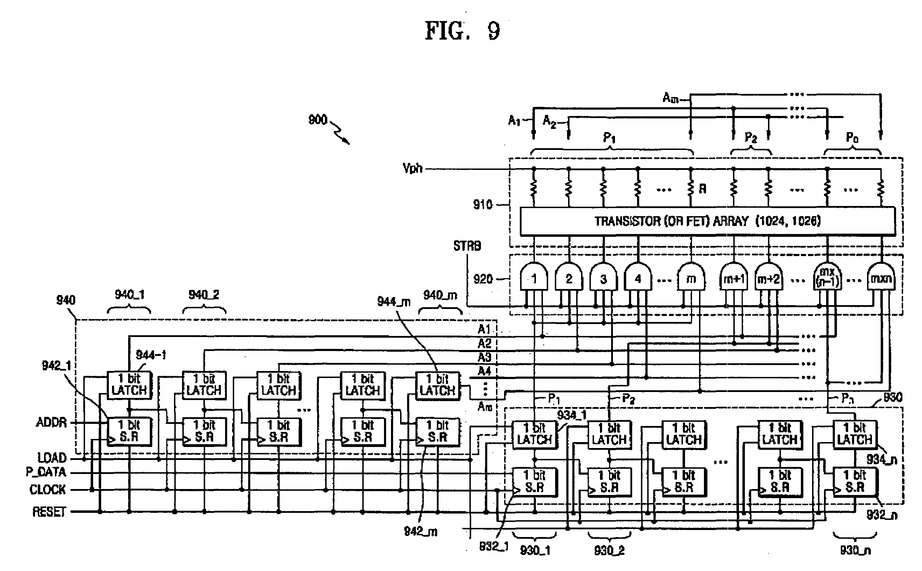

FIG. 9 is a circuit diagram of a print head driving apparatus 900 according to another embodiment of the present Invention. The print head driving apparatus 900 includes 1-bit shift registers 942_1 to 942_*m* and 1-bit latches 944_1 to *944_m* to process address signals instead of the *m*-bit shift register 442 and the *m*-bit latch 444 of the conventional print head driving apparatus 400 of FIG. 4. Additionally, the print head driving apparatus 900 also includes 1-bit shift registers 932_1 to 932_*n* and 1-bit latches 934_1 to 934_*n* of the previous embodiment, illustrated in FIG. 7, to separatefy process the primitive signals instead of the *n*-bit shift register 432 and *n*-bit latch 434 of the conventional print head driving apparatus 400 of FIG. 4.

Referring to FIG. 9, the print head driving apparatus 900 includes a nozzle driving unit 910, a selecting unit 920 including a plurality of AND gates to selectively drive a plurality of nozzle drivers included in the nozzle driving unit 910, a primitive signal receiving unit 930 to receive a primitive signal to select a primitive group from among a plurality of primitive groups, each Including m nozzles through which ink can be ejected at the same time during a given print cycle, and an address signal receiving unit 940 to receive an address signal to select one or more nozzles within the selected primitive group (selected by the primitive signal) through which ink is ejected during the given print cycle.

The address signal receiving unit 940 includes *m* 1-bit shift registers 942_1 through 942_*m*, which are serially connected to each other and receive the address signal of 1 bit at a time, and *m* 1-bit latches 944_1 through 944_*m* that correspond to the *m* 1-bit shift registers 942_1 through 942_*m*.

Here, the primitive signal receiving unit 930 includes *n* 1-bit shift registers 932_1 through 932_*n*. which are serially connected to each other and receive the primitive signal of 1 bit at a time, and *n* 1-bit latches 934_1 through 934_*n* that correspond to the *n* 1-bit shift registers 932_1 through 932_n.

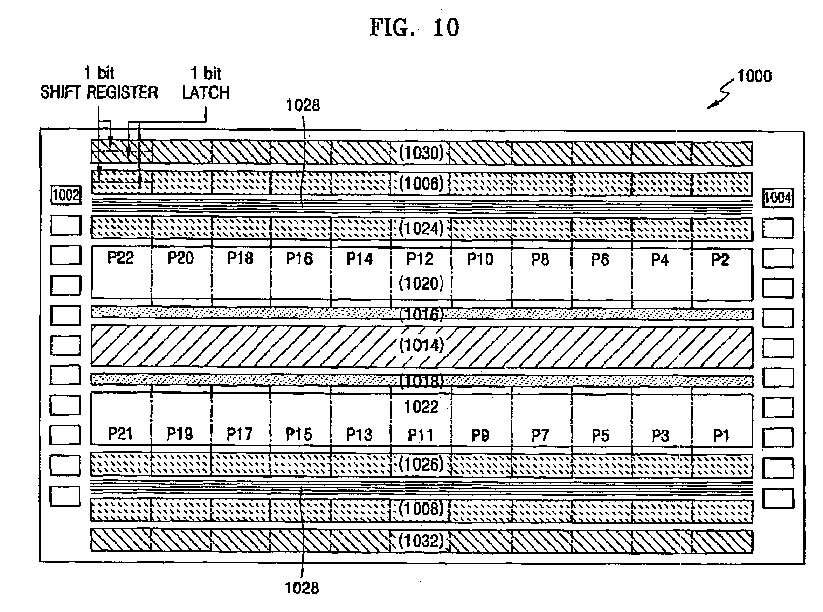

FIG. 10 Illustrates a layout of a semiconductor circuit board 1000 In which the print head driving apparatus 900 of FIG 9 Is implemented according to another embodiment of the present invention. Referring to FIG. 10, pad groups 1002 and 1004 to electrically connect internal logic devices of the semiconductor circuit board 1000 to external devices are located at the left and right edges of the semiconductor circuit board 1000.

An ink supply unit 1014 is located along the longitudinal direction of the semiconductor circuit board 1000 in a center portion thereof, and upper and lower nozzles 1016 and 1018 are arranged over and under the ink supply unit 1014, having the ink supply unit 1014 disposed therebetween. Upper and lower transistor arrays 1020 and 1022 are arranged over the upper nozzles 1016 and under the lower nozzles 1018, respectively. Upper and lower selecting units 1024 and 1026 are located over the upper transistor array 1020 and under the transistor array 1022, respectively.

ADDR bus groups 1028 to transfer address signals are located along the top and bottom edges of the semiconductor circuit board 1000. Here, the ADDR bus groups 1028, each including *m* wires, are arranged in a manner that the m wires are arranged along the top edge of the semiconductor circuit board 1000 and the m wires are arranged along the bottom edge of the semiconductor circuit board 1000.

Upper and lower primitive signal receiving units 1006 and 1008 to transfer primitive signals are located over the transistor array 1020 and under the transistor array 1022, respectively. A wire to transfer the primitive signals is arranged along with the ADDR bus groups 1028 In both the top and bottom edge portions of the semiconductor circuit board 1000. Here, the wires Include m +1 wires corresponding to m wires to transfer m bits of the address signal that are provided to each of the primitive groups P1 through P22 and a single wire to provide the primitive signal data to the respective primitive groups P1 through P22. Thus, m +1 wires are arranged along the top edge of the semiconductor circuit board 1000 and m +1 wires are arranged along the bottom edge of the semiconductor circuit board 1000. In other words, since each of the plurality of primitive groups P1 through P22 only receives a respective primitive data signal bit to indicate whether the respective primitive group is selected to print, a single wire can be used to transfer the primitive signal from the primitive signal receiving units 1006 and 1008, including the serially connected n 1-bit shift registers 932_1 through 932_*n* and the serially connected n 1-bit latches 934_1 through 934_*n*, to upper and lower selecting units 1024 and 1026 that correspond to the respective primitive groups P1 through P22. Unlike the primitive data signal, since each of the plurality of primitive groups P1 through P22 receives all m bits of the address signal to indicate which nozzles within the selected primitive group are selected to print, m wires can be used to transfer the address signal from the address signal receiving units 1030 and 1032, including the serially connected *m* 1-bit shift registers 942_1 through 942_m and the serially connected *m* 1-bit latches 944_1 through 944_*m*, to the upper and lower selecting units 1024 and 1026 that correspond to all the primitive groups P1 through P22. it should be understood that although the above description refers to a primitive group selected by the primitive signal, more than one primitive group of the n plurality of primitive groups may be selected to print during the given print cycle, and m may be equal to or different than n.

As illustrated in FIG 9, the primitive signal receiving units 930_1 through 930_*n* for the respective primitive groups can be located in areas provided for upper and lower primitive signal receiving units 1006 and 1008 of FIG. 10. Additlonally, the address signal receiving units 940_1 through 940_*m* of FIG. 9 correspond to the address signal-receiving units 1030 and 1032 of FIG. 10.

The semiconductor circuit board 1000 Illustrated in FIG. 10 becomes longer in a widthwise direction, however, shorter in the longitudinal direction, than the conventional semiconductor circuit board 800 of FIG. 8. Additionally, in an actual process, since the primitive signal receiving units 1006 and 1008 are formed in a similar manner as the address signal receiving units 1030 and 1032, the length of the semiconductor circuit board 1000 can be made even shorter by locating the primitive signal receiving units 1006 and 1008 adjacent to the address signal receiving units 1030 and 1032,

As described above, according to a print head driving apparatus according to an embodiment of the present invention, by providing shift registers and latches to generate a selection signal (s) to select a nozzle (nozzles) for each primitive group, It is possible to reduce a number of wires required to transfer the selection signal(s) on a semiconductor circuit board in which the print head driving apparatus is implemented, thereby achieving a high density layout of the semiconductor circuit board.

Although a few embodiments of the present invention have been shown and described, it will be appreciated by those skilled in the art that changes may be made in these embodiments without departing from the principles and spirit of the Invention, the scope of which Is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this spedfication (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A print head driving apparatus (700) to drive a print head of an ink-jet printer, comprising:
a selecting unit (720) to selectively drive a plurality of nozzles in the print head;
a primitive signal receiving unit (730) operable to receive a serial primitive signal to select a primitive group from among a plurality of n primitive groups each containing a plurality of m nozzles capable of ejecting ink from the print head during a given print cycle, to convert the serial primitive signal to a parallel primitive signal, and to provide the parallel primitive signal to the selecting unit; and
an address signal receiving unit (740) operable to receive a serial address signal to select at least one nozzle through which ink should be ejected within the selected primitive group, to convert the serial address signal to a parallel address signal, and to provide the parallel address signal to the selecting unit, wherein the primitive signal-receiving unit (730) comprises n 1-bit shift registers (732_n) serially connected to each other, and each of the n 1-bit shift registers corresponds to a respective one of the plurality of n primitive groups.

2. The apparatus of claim 1, wherein the address signal-receiving unit (740) comprises m 1-bit shift registers (742) serially connected to each other.

3. The apparatus of claim 2, wherein the address signal-receiving unit (740) further comprises *m* 1-bit latches (744) to receive respective bits of the parallel address signal, to temporarily latch the respective bits, and to provide the respective bits to all of the n primitive groups.

4. The apparatus of any preceding claim, wherein the primitive signat-receiving unit (730) further comprises n 1-bit latches (734_n)to receive respective bits of the parallel primitive signal from the n 1-blt shift registers (732_n), to temporarily latch the respective bits, and to provide the respective bits to respective primitive groups.

5. The apparatus of any preceding claim, wherein the selecting unit (720) comprises a plurality of AND gates to correspond to a plurality of m x n nozzles in the print head and operable to receive a corresponding bit of the address signal and a corresponding bit of the primitive signal.

6. A print head driving apparatus (700), comprising:
a plurality of nozzles;
a selecting unit (720) operable to receive one or more selection signals and to
selectively drive one or more nozzles to print during a print cycle; and
a selection signal receiving unit including a plurality of 1-bit shift registers (732_n) to receive a
selection signal and to provide the selection signal to the selecting unit (720), and the selection signal including a plurallty of bits that correspond to the plurality of nozzles to indicate whether the respective nozzles should print during the print cycle.

7. The apparatus of claim 6, wherein the selection signal receiving unit comprises:
a first plurality of 1-bit shift registers to receive a first selection signal selecting at least one nozzle grouping from among a plurality of nozzle groupings to print during the print cycle; and
a second plurality of 1-bit shift registers to receive a second selection signal selecting at least one nozzle from within the selected nozzle grouping to print during the print cycle.

8. The apparatus of claim 6 or 7, wherein the selection signal receiving unit comprises:
a primitive signal receiving unit (730) operable to receive a serial primitive signal to select a primitive group from among a plurality of n primitive groups each containing a plurality of m nozzles capable of ejecting Ink from the print head during the print cycle, to convert the serial primitive signal to a parallel primitive signal, and to provide to the parallel primitive signal to the selecting unit; and
an address signal receiving unit (740) to receive a serial address signal to select at least one noale through which ink should be ejected within the selected primitive group, to convert the serial address signal to a parallel address signal, and to provide the parallel address signal to the selecting unit.

9. The apparatus of any of daims 6-8, wherein the plurality of nozzles comprises a first number of primitive groups each having a second number of nozzles, and the plurality of 1-bit shift registers comprises a first number of 1-bit shift registers to select one or more primitive groups from the first number of primitive groups.

10. The apparatus of any of claims 6-9, wherein the plurality of nozzles comprises a first number of primitive groups each having a second number of nozzles, and the selection signal receiving unit comprises the second number of 1-bit shift registers to select one or more nozzles from the second number of nozzles of each primitive group.

11. The apparatus of any of claims 6-10, further comprising:
a semiconductor circuit board (800);
a print head located in a center portion of the semiconductor circuit board and including the plurality of nozzles (816, 818);
a plurality of pads (802, 804) located along edge portions of the semiconductor circuit board to electrically connect internal devices of the semiconductor circuit board to external devices; and
the selection signal receiving unit comprises a primitive signal receiving unit (730) mounted parallel to the selecting unit (720) with respect to a longitudinal direction of the semiconductor circuit board and adjacent to the print head to provide a primitive group selection signal to the selecting unit, and the primitive signal receiving unit includes a plurality of 1-bit shift registers serially connected to each other, each 1-bit shift register to correspond to a respective one of a plurality of primitive groups,
wherein the primitive group selection signal designates one of the plurality of primitive groups containing a plurality of nozzles capable of being driven during the print cycle.

12. A semiconductor circuit board (800) having a print head driving apparatus of an ink-jet printer, comprising:
a print head located in a center portion of the semiconductor circuit board and including a plurality of nozzles (816. 818);
a plurality of pads (802, 804) located along edge portions of the semiconductor circuit board to electrically connect internal devices of the semiconductor circuit board to external devices and to receive signals;
a selecting unit (720) mounted adjacent to the print head to receive a selection signal to selectively drive a plurality of nozzles in the print head; and
a primitive signal receiving unit (730) mounted parallel to the selecting unit with respect to a longitudinal direction of the semiconductor circuit board and adjacent to the print head to provide a primitive group selection signal to the selecting unit according to the signals,
wherein the primitive group selection signal designates one of a plurality of primitive groups containing a plurality of nozzles capable of being driven during a given print cycle.

13. The semiconductor circuit board of claim 12, wherein the primitive signal-receiving unit (730) comprises a plurality of 1-bit shift registers (732_n) serially connected to each other, and each of the 1-bit shift registers corresponds to a respective one of the plurality of primitive groups.

14. The semiconductor circuit board of claim 13, wherein the primitive signal-receiving unit (730) further comprises a plurality of 1-bit latches (734_n)to receive respective bits of the primitive group selection signal from the plurality of 1-bit shift registers (732_n), to temporarily latch the respective bits, and to provide the respective bits to the selecting unit.

15. The semiconductor circuit board of any of claims 12-14, further comprising:
an address signal receiving unit (740) mounted parallel to the selecting unit (720) with respect to the longitudinal direction of the semiconductor circuit board and adjacent to the print head to provide an inter-group selection signal to the selecting unit designating at least one of the plurality of nozzles included within the selected primitive group.

16. The semiconductor circuit board of claim 15, wherein the address signal-receiving unit (940) comprises:
a plurality of 1-bit shift registers (942_n) serially connected to each other to receive respective bits of the inter-group selection signal; and
a plurality of 1-bit latches (944_n) corresponding to the plurality of 1-bit shift registers to receive respective bits of the inter-group selection signal from the plurality of 1-bit shift registers, to temporarily latch the respective bits, and to provide the respective bits to the selecting unit.

17. The semiconductor circuit board of claim 15 or 16, wherein the plurality of primitive groups comprises *n* primitive groups each containing *m* nozzles, and further comprising:
a single wire to connect the primitive signal receiving unit with the selecting unit; and
*m* wires to connect the address signal receiving unit with the selecting unit.

18. The semiconductor circuit board of any of claims 12-17, wherein the plurality of primitive groups are divided into a first group disposed along an upper side of the print head and a second group disposed along a lower side of the print head.

19. A semiconductor circuit board (1000) having a print head driving apparatus (900) implemented thereon, comprising:
a print head region including a nozzle (1016, 1018) region and an ink supply (1014) region and extending along a first direction of the semiconductor circuit board at a center thereof;
at least one nozzle driving unit (910) region adjacent to the print head region and extending along the first direction of the semiconductor circuit board and in parallel to the print head region;
at least one selecting unit (920) region adjacent to the at least one nozzle driving region and extending along the first direction of the semiconductor circuit board and in parallel to the print head region; and
at least one primitive signal receiving unit (930) region adjacent to the at least one selecting unit region and extending along the first direction of the semiconductor circuit board and in parallel to the print head region.

20. The semiconductor circuit board of claim 19, further comprising:
at least one address signal receiving unit (940) region adjacent to the at least one primitive
signal receiving unit (930) region and extending along the first direction of the semiconductor circuit board and In parallel to the print head region.

21. The semiconductor circuit board of claim 20, wherein the first direction is a longitudinal direction, and further comprising:
at least one external connection region disposed along at least one longitudinal end of the semiconductor circuit board having a wire to connect to the at least one primitive signal receiving unit region and a plurality of wires to connect to the at least one address signal receiving unit region.

22. The semiconductor circuit board of claim 21, further comprising:
a bus region disposed between the at least one selecting unit region and the at least one primitive signal receiving unit region and extending from the at least one external connection region along the first direction of the semiconductor circuit board,

23. The semiconductor circuit board of any of claims 19-22, wherein the at least one primitive signal receiving unit (930) comprises:
at least one primitive 1-bit latch (934_n) region adjacent to the at least one selecting unit region and extending along the first direction of the semiconductor circuit beard and in parallel to the print head region, and
at least one primitive 1-bit shift register (932_n) region adjacent to the at least one primitive 1-bit latch region and extending along the first direction of the semiconductor circuit board and in parallel to the print head region.

24. The semiconductor circuit board of claim 23, wherein the at least one address signal receiving unit (940) comprises:
at least one address 1-bit latch (944_n) region adjacent to the at least one primitive signal receiving unit region and extending along the first direction of the semiconductor circuit board and in parallel to the print head region; and
at least one address 1-bit shift register (942_n) region adjacent to the at least one address 1-bit latch region and extending along the first direction of the semiconductor circuit board and in parallel to the print head region.

25. A semiconductor circuit board (1000), comprising:
a plurality of nozzles (1016, 1018);
a selecting unit (920) to receive one or more selection signals and to selectively drive one or more nozzles to print during a print cycle; and
a selection signal receiving unit including a plurality of 1-bit shift registers to receive a selection signal and to provide the selection signal to the selecting unit, and the selection signal including a plurality of bits that correspond to the plurality of nozzles to indicate whether the respective nozzles should print during the print cycle.

26. The semiconductor circuit board of claim 25, wherein the plurality of nozzles comprises a first number of primitive groups each having a second number of nozzles, and the plurality of 1-bit shift registers comprises a first number of 1-bit shift registers to select one or more primitive groups from the first number of primitive groups.

27. The semiconductor circuit board of claim 25, wherein the plurality of nozzles comprises a first number of primitive groups each having a second number of noules, and the selection signal receiving unit comprises the second number of 1-bit shift registers to select one or more nozzles from the second number of nozzles of each primitive group.

28. The semiconductor circuit board of claim 25, further comprising:
a print head located in a center portion of the semiconductor circuit board and including the plurality of nozzles;
a plurality of pads (1002, 1004) located along edge portions of the semiconductor circuit board to electrically connect internal devices of the semiconductor circuit board to external devices: and
the selection signal receiving unit comprises a primitive signal receiving unit mounted parallel to the selecting unit with respect to a longitudinal direction of the semiconductor circuit board and adjacent to the print head to provide a primitive group selection signal to the selecting unit, and the primitive signal receiving unit includes a plurality of 1-bit shift registers serially connected to each other, each 1-bit shift register to correspond to a respective one of a plurality of primitive groups,
wherein the primitive group selection signal designates one of the plurality of primitive groups containing a plurality of nozzles capable of being driven during the print cycle.

29. A semiconductor circuit board (1000), comprising:
a plurality of primitive groups (P1-P22) each having a plurality of nozzles disposed in a first direction; and
a plurality of 1-bit shift registers disposed in the first direction to correspond to the respective primitive groups.

30. The semiconductor circuit board of claim 29, further comprising:
a second plurality of 1-bit registers disposed in the first direction to select corresponding ones of the nozzles of each primitive group.

31. The semiconductor circuit board of claim 30, further comprising:
a plurality of address buses disposed in the first direction to communicate with the nozzles and the second plurality of 1-bit registers.

32. The semiconductor circuit board of claim 30 or 31, further comprising:
a plurality of address buses disposed between the plurality of 1-bit shift registers and the second plurality of 1-bit shift registers.

33. The semiconductor circuit board of any of claims 29-32, further comprising:
a plurality of pads disposed in a second direction to communicate with the plurality of 1-bit shift registers.
